Europäisches Patentamt

European Patent Office

Office européen des brevets

(11) Publication number: **0 105 806**
**A1**

(12) # EUROPEAN PATENT APPLICATION

(21) Application number: **83401917.6**

(22) Date of filing: **30.09.83**

(51) Int. Cl.³: **F 16 D 27/02**

(30) Priority: **30.09.82 US 430908**

(43) Date of publication of application:
**18.04.84 Bulletin 84/16**

(84) Designated Contracting States:
**DE FR GB IT**

(71) Applicant: **Canadian Fram Limited
540 Park Avenue East P.O. Box 2014
Chatham Ontario N7M 5M7(CA)**

(72) Inventor: **Casey, Benjamin Stanley
199, John Street Apt 1
Blenheim Ontario N0P 1A0(CA)**

(72) Inventor: **de Jong, Allan Wayne
34, English Side Road
Chatham Ontario N7M 4H7(CA)**

(74) Representative: **Brullé, Jean et al,
Service Brevets Bendix 44, rue François 1er
F-75008 Paris(FR)**

(54) Overwrapping band electromechanical clutch.

(57) An electromagnetic clutch (10) including a driving member (12), a driving member (42) coaxially positioned relative to the driving member defining a gap therebetween. The clutch further including an electromagnet (35) carried by one of the members for developing a magnetic force in response to control signals and an overwrapping band positioned in the gap, in driving engagement and rotatable with the other of the members for magnetically engaging the one member in response to the magnetic force. The overwrapping band comprising a first inner band (58) including a first portion for magnetically engaging the one member and a second portion for overwrapping the first portion for generating a radial force upon the one member through the first portion.

Fig-2

EP 0 105 806 A1

## OVERWRAPPING BAND ELECTROMECHANICAL CLUTCH

### Background Summary of the Invention

This invention relates to electromechanical clutches and in particular to radial band clutches.

Electromechanical clutches have been used in conjunction with a motor and/or an engine to periodically drive a coacting device such as a fan or pump in response to signals derived from a controller. The periodic clutching of the fan or other device increases the overall efficiency of operation of the motor or engine. Some electromechanical clutches use a band as a means for transmitting torque from a rotating or a driving member to a driven member as shown in United States patent 4,239,095.

It is an object of the present invention to provide an electromechanical clutch that generates an improved torque to current relationship. Another object of the present invention is to provide a clutch wherein there is a limited degree of slippage between the driving and driven members such that the increased torque transmitted is gradually applied to the driven member. Accordingly, the present invention comprises: an electromagnetic clutch comprising: a driving member; a driven member coaxially positioned relative to said driving member defining a gap therebetween; electromagnetic means carried by one of said members for developing a magnetic force in response to control signals; and overwrapping band means positioned in said gap, in driving engagement and rotatable with the other of the members for magnetically engaging and rotating the one member in response to the magnetic force comprising an inner band including a first portion for magnetically engaging the one member and a second portion for overwrapping the

-2-

first portion for generating a radial force upon said one member through said first portion. In one embodiment of the invention the overwrapping band means is fixed to the driven member whether an alternate embodiment utilizes a frictional engagement.

## Brief Description of the Drawings

In the drawings:

FIGURE 1 illustrates a cross-sectional view of a clutch.

FIGURE 2 is a sectional view taken to section 2-2 of FIGURE 1.

FIGURE 3 illustrates an overwrapping band tightly wrapped about a rotating member.

FIGURE 4 illustrates an alternate embodiment of the present invention.

FIGURE 5 illustrates a composite band shown in FIGURE 4.

## Detailed Description of the Drawings

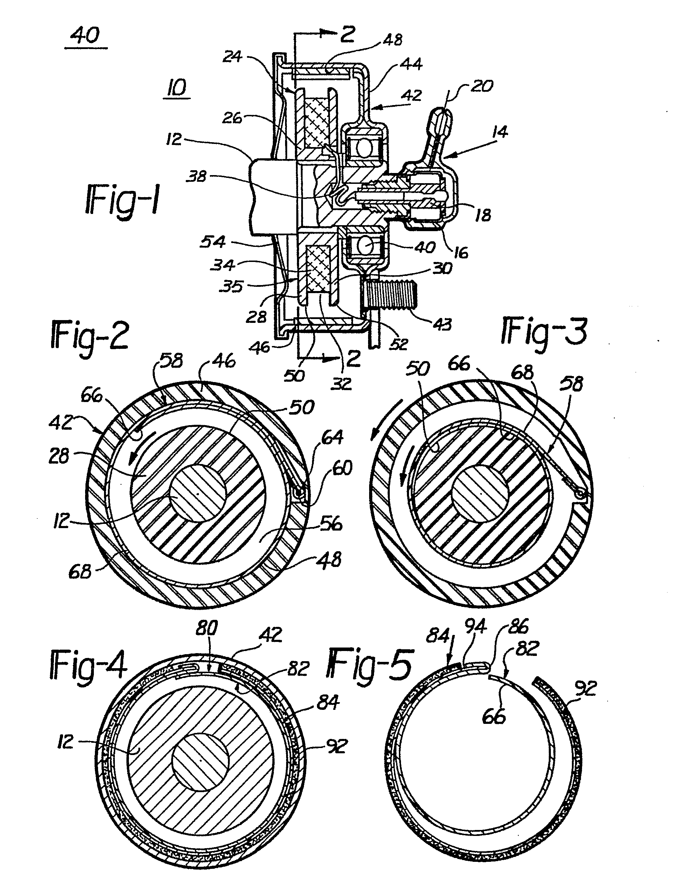

Reference is now made to FIGURE 1 which illustrates a cross-sectional view of an electromechanical clutch 10 that is adapted to drive a device such as a fan (not shown). The clutch 10 includes a first or driving member 12 that is adapted to be mounted in rotating engagement to a motor or engine (not shown). The opposite end of the driving member 12 carries a slip ring assembly generally indicated as 14. The slip ring assembly includes a fixed slip ring 16 which engages a rotating member 18. The rotating member 18 is mounted to and rotatable with the driving member 12. The fixed slip ring 16 and rotating member 18 are adapted to receive connecting wire 20. The connecting wire 20 receives an input or control signal which is generated in response to operational parameters of the clutch, motor and/or engine in a known manner. A spool 24, which is preferably made of magnetic material, is mounted for rotation with the driving member 12. Those skilled in the art will appreciate that the spool may be press fit over a portion of the driving member 12 or otherwise attached thereto. The spool 24 comprises a bottom 26 linking two radially extending walls 28 and 30 forming a coil space 32 therebetween. An electromagnetic coil 34 comprising a plurality of windings is fitted within or wound about the spool 24. The windings 34 are connected to the slip ring assembly 14 through a wire 38 in a known manner. The spool 24 and coil 34 comprise an electromagnet 35.

A bearing 40 is mounted about the driving member 12 between the spool 24 and the slip ring assembly 14. A second or driven member 42 is mounted to and rotatable about the bearing 40. By way of illustration the driven member 42 contains bolts 43, only one of which is shown, that may be used for attachment of fan blades or connection with other devices to be driven. The driven member 42 comprises a substantially cup shapped element including a radially extending first portion 44 extending radially outward from the bearing 40 and an axially extending portion 46 extending therefrom for defining a circumferentially positioned inner wall 48 in coaxial relation to the ends 50 and 52 of the walls 28 and 30 of the spool 24. The axially extending portion 46 circumscribes the spool 24. A sealing element 54 is provided to prevent debris from entering the volume surrounding the spool 24.

Reference is now made to FIGURE 2 which further illustrates the relationship between the axially extending portion 46, inner wall 48 and one of the walls 28 of the spool 24. The space between the inner wall 48 and the outer circumference or ends of the walls 28 and 30 defines an air gap 56 (shown somewhat exagerated). A circumferentially extending spiral band 58 is disposed within the air gap 56. The band includes a fixed end 60 that is rotatably hinged relative to the axially driven member 42. More particularly, the fixed end 60 is mounted to a pin 64. The band 58 further defines an inwardly extending spiral terminating at a free end 66 wherein the free end 66 of the band 58 is overlapped by a predetermined amount by a medial portion 68 of the band 58. Preferably the band 58 is fabricated of a ferromagnetic resilient or spring-like material which permits it to be self-biased toward the inner wall 48 of the driven member 42.

In operation, during those periods of time when a control signal is not communicated to the wire 20, the coil 30 remains unenergized. The first or driving member 12 is rotated in response to the action of the motor or engine. During this unenergized interval the second or driven member 42 free wheels, i.e., rotates freely, about the bearing 40. In response to a control signal the coil 34 is activated therein drawing the free end 66 of the band 58 in contact with the spool 24. This engagement of the inner surface of the band 58 to the outer surfaces 50 and 52 of the walls 28 and 30 causes the band to rotate with and draw the band 50 tightly around the spool 24. More particularly as shown in FIGURE 3 the above action draws the medial portion 68 of the band into an overwrapping relation about the free end 66. Having tightly wrapped the band 58 about the spool 24, the second or driven member 42 is rotated with the driving member 12 by virtue of this mechanical link provided by the overwrapping band. Alternate embodiments of the invention illustrated in FIGURES 1, 2 and 3 can be achieved by interchanging the roles of the first or driving member 12 and the second or driven member 42 such that the second member 42 is adapted to be driven by an engine or motor either directly or by gears or pulleys and wherein a fan or other device is attached to the first member 12.

By virtue of the instantaneous, lowslip torque transmission characteristic of the above embodiment of the invention it is ideally suited to drive low inertia loads. If large loads are to be driven it may be desirable, as discussed in U.S. 4,239,095, which is incorporated herein by reference, to utilize a friction material to transmit torque to the driven member as opposed to the direct drive means discussed above. As discussed below, the friction material permits the first member 12 and the second member 42 to slip relative to one another. FIGURES 4 and 5 illustrate a composite band 80 which includes an inner band member 82 and an outer band number 84. FIGURE 5 illustrates the composite band 80 in isolation and in a relaxed condition. The interrelation of these bands is illustrated in FIGURES 4 and 5. The inner band 82 is substantially identical to the band 58, however it does not include a fixed end 60. Rather, it includes end 86 opposite the free end 66 that is adapted to be attached to the outer band 84. One means of attaching the inner band to the outer band requires the crimping of a portion of the end 86 over an extending portion 94 of the outer band. Other means such as riveting or providing the inner band with a boss that engages a slot in the outer band are deemed to be equivalent. The outer band 84 includes a strip 92 of resilient nonmagnetic material and a corresponding strip of frictional material 96 which is bonded to the outer circumferential surface of the strip 92. The strip 92 includes the extending portion 94 that serves as the attachment point for the inner band 82. The inner band spirals inwardly such that its free end is overlapped by an end of the outer band and friction material to insure the overwrapping relation upon activation.

Many changes and modifications in the above decribed embodiments of the invention can of course be carried out without departing from the scope thereof. Accordingly, that scope is intended to be limited only by the scope of the appended claims.

Claims:

1.    An electromagnetic clutch (10) comprising:
a driving member (12);
a driven member (42) coaxially positioned relative to said driving member defining a gap (56) therebetween;
electromagnetic means (24, 34, 35) carried by one of said members (12) for developing a magnetic force in response to control signals; and
overwrapping band means (58; 82, 84) positioned in said gap, in driving engagement and rotatable with the other of said members (42) for magnetically engaging said one member (12) comprising an inner band (58) including a first portion (66) for magnetically engaging said one member and a second portion (68) for overwrapping said first portion for generating a radial force upon said one member through said first portion in response to the magnetic force.

2.    The clutch as defined in Claim 1 wherein said driven member (42) is positioned about said driving member (12).

3.    The clutch as defined in Claim 2 wherein said overwrapping band means comprises a flexible spiral wound spring-like coil (58) of a ferromagnetic material.

4.    The clutch as defined in Claim 3 wherein said coil comprises a band having a fixed end (60) attached to said other member (42) and a free end (66) positioned such that the remaining portions of said band overlap the free end.

5.    The clutch as defined in Claim 4 wherein, during the absence of control signals, said band is self biased against said other member.

6. The clutch as defined in Claim 4 wherein said fixed end (60) is attached to said driven member (42) and said free end (66) is positioned opposite said driving member (12).

7. The clutch as defined in Claim 1 wherein said overwrapping band means includes a second or outer band (86) positioned between said first or inner band (58, 84) and said other member (42) adapted to engage the second portion of said first or inner band and an outer portion positioned between said other member including a friction material portion for engaging said other member.

8. The clutch as defined in Claim 7 wherein said other member is said driven member.

9. The clutch as defined in Claim 8 wherein, during the absence of control signals, said overwrapping band means is self biased against said driven member.

10. An electromagnetic clutch comprising:
   a driving member (12);
   a driven member (42) coaxially positioned relative to said driving member defining a gap therebetween;
   electromagnetic means (24, 34, 35) carried by one of said members for developing a magnetic force in response to control signals; and
   overwrapping band means (58; 82, 84) positioned in said gap, in driving engagement and rotatable with the other of said members for magnetically engaging said one member in response to the magnetic force comprising a first inner band including a first portion for magnetically engaging said one member and a second portion for overwrapping said first portion to rotationally engage said one member.

11. The clutch as defined in Claim 10 wherein said driven member (42) is positioned about said driving member (12).

12. The clutch as defined in Claim 11 wherein said overwrapping band means (58) comprises a flexible spiral wound spring-like coil of a ferromagnetic material.

13. The clutch as defined in Claim 12 wherein said coil (58) comprises a band having a fixed end (60) attached to said other member and a free end (66) positioned such that the remaining portions of said band overlap the free end.

14. The clutch as defined in Claim 13 wherein, during the absence of control signals, said band (58) is self biased against said other member.

15. The clutch as defined in Claim 13 wherein said fixed end is attached to said driven member (42) and said free end is positioned opposite said driving member (12).

16. The clutch as defined in Claim 10 wherein said overwrapping band means includes a second or outer band positioned between said first or inner band and said other member adapted to engage the second portion of said first or inner band and an outer portion position between said other member including a friction material portion for engaging said other member.

17. The clutch as defined in Claim 16 wherein said other member is said driven member.

Fig-1

Fig-2

Fig-3

Fig-4

Fig-5

0105806

European Patent
Office

EUROPEAN SEARCH REPORT

Application number

EP 83 40 1917

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A- 12 055 (KNAPP) (1910) * Whole document * | 1-17 | F 16 D 27/02 |
| Y,D | US-A-4 239 095 (DE JONG) * Whole document * | 1-17 | |
| A | DE-C- 102 831 (HODGKINSON) | | |
| A | US-A-3 040 856 (SHOQUIST) | | |

TECHNICAL FIELDS SEARCHED (Int. Cl. ³)

F 16 D 27/00
F 16 D 13/00

The present search report has been drawn up for all claims

| Place of search THE HAGUE | Date of completion of the search 04-01-1984 | Examiner BALDWIN D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82